# EUROPÄISCHE PATENTSCHRIFT

(11) **EP 2 625 055 B1**
(45) Veröffentlichungstag und Bekanntmachung des Hinweises auf die Patenterteilung: **24.08.2016**
(21) Anmeldenummer: 11761610.2
(22) Anmeldetag: 28.09.2011
(51) Int. Cl.: B60K 26/02, G05G 5/03, G05G 1/38, G10K 7/04

(54) **VERFAHREN ZUM BETRIEB EINER FAHRPEDALEINHEIT FÜR KRAFTFAHRZEUGE**
METHOD FOR OPERATING AN ACCELERATOR PEDAL UNIT FOR MOTOR VEHICLES
PROCÉDÉ PERMETTANT DE FAIRE FONCTIONNER UN ENSEMBLE PÉDALE D'ACCÉLÉRATION DE VÉHICULES AUTOMOBILES

(30) Priorität: 19.07.2011 DE 102011079375; 06.10.2010 DE 102010042036
(43) Veröffentlichungstag der Anmeldung: 14.08.2013
(73) Patentinhaber: Conti Temic Microelectronic GmbH, 90411 Nürnberg (DE)
(72) Erfinder: DREWS, Frank, 90552 Röthenbach (DE); HABEL, Peter, 90408 Nürnberg (DE); LEONE, Carmelo, 85354 Freising (DE)
(86) Internationale Anmeldenummer: PCT/EP2011/066847
(87) Internationale Veröffentlichungsnummer: WO 2012/045625

(56) Entgegenhaltungen:
- EP-A2- 1 602 520
- DE-A1- 10 212 674
- DE-A1-102004 025 829
- US-A- 5 825 901

## Beschreibung

Die vorliegende Erfindung betrifft ein Verfahren zum Betrieb einer Fahrpedaleinheit für Kraftfahrzeuge, wobei eine durch eine entsprechende Betätigungskraft herbeigeführte Lageänderung der Pedalplatte gegenüber ihrer Ausgangslage entgegen einer Rückstellkraft einer Pedalrückstellfeder zu einer Erhöhung der Antriebskraft des Antriebsmotors des Kraftfahrzeugs führt und bei nachlassender Betätigungskraft die Rückstellkraft der Pedalrückstellfeder die Pedalplatte in Richtung ihrer Ausgangslage zurückbefördert, wobei ein fremdansteuerbarer elektromechanischer Aktuator derart angeordnet ist, dass eine zusätzliche Rückstellkraft auf die Pedalplatte einstellbar ist.

Bei modernen Kraftfahrzeugen besteht generell das Problem, dass der Fahrzeugführer mit vielen Informationen seines Kraftfahrzeugs versorgt wird. Diese Reizüberflutung des Fahrzeugführers durch akustische und optische Signale führt zu einer Ablenkung vom Verkehr. Infolgedessen neigt der Fahrzeugführer dazu, die Signale zu überhören oder zu ignorieren oder er kann sie nicht mehr der Ursache zuordnen. Eine Fahrpedaleinheit der eingangs genannten Gattung vermeidet alle Nachteile optischer und akustischer Systeme: Es ist eine geeignete Mensch-Maschinen-Schnittstelle für Längsdynamik-Funktionen (Abstandsinformation, Geschwindigkeitsbegrenzung und -regelung) sowie zur Anzeige von Gefahrenhinweisen oder zur Anzeige von Schaltpunktanzeigen eines manuell geschalteten Getriebes.

Aus der DE 10 2004 025 829 B4 ist eine Vorrichtung bekannt, bei der das Gegenkraftelement durch einen Torquemotor gebildet ist mit feststehenden Feldspulen am Stator und mit einer an verschiedenen Stellen gegensätzlich magnetisierten Magnetscheibe am Rotor. Derartige Torquemotoren zeichnen sich dadurch aus, dass sie sehr hohe Drehmomente zur Verfügung stellen. Nachteilig sind elektrodynamische und geometrische Nichtlinearitäten, die dazu führen, dass bei identischer, elektrischer Ansteuerung kein identisches Kraftgefühl am Fahrerfuß erzeugt wird.

Es ist daher Aufgabe der vorliegenden Erfindung, ein Verfahren der eingangs genannten Gattung dahingehend zu verbessern, dass dem Fahrzeugführer ein voraussehbares Kraftgefühl an seinem Fuß erzeugt wird.

Diese Aufgabe wird durch ein Verfahren mit den kennzeichnenden Merkmalen des Patentanspruchs 1 gelöst. Dabei ist vorgesehen, dass ein Kalibrierungsvorgang durchgeführt wird, sodass ein linearer Zusammenhang zwischen der Sollstromanforderung an den elektromechanischen Aktuator und der zusätzlichen Rückstellkraft über den gesamten Pedalhub realisiert wird. Durch diese Maßnahme wird bei identischer Ansteuerung stets das identische Kraftgefühl am Fuß des Fahrzeugführers erzeugt. Damit wird dem Fahrzeugführer ein gutes Gefühl vermittelt, weil er ein wiederkehrendes und damit nach einer gewissen Zeit gewohntes Kraftgefühl erfährt. Dies wird dadurch realisiert, dass der Kalibrierungsvorgang derart durchgeführt wird, dass bei jeder Winkellage des elektromechanischen Aktuators für eine vorbestimmte Sollstromanforderung ein konstanter Kraftwert der zusätzlichen Rückstellkraft erzeugt wird.

Das erfindungsgemäße Verfahren sieht vor, dass der Kalibrierungsvorgang mit Hilfe eines Kennfeldes durchgeführt wird. Das Kennfeld ist vorzugsweise als Matrix ausgebildet, die anhand von empirisch ermittelten Daten oder anhand einer Modellberechnung der Fahrpedaleinheit bestimmt wird. Unter einer Modellberechnung versteht man dabei das Programmieren eines Modells auf einem Computer, das die geometrischen und elektrodynamischen Nichtlinearitäten der Fahrpedaleinheit berücksichtigt und ein virtuelles Modell der Fahrpedaleinheit berechnet.

Zur Durchführung des Kalibrierungsvorganges ist vorgesehen, dass dem Kennfeld die Winkellage des elektromechanischen Aktuators sowie eine Sollstromanforderung aus einer Steuereinheit zugeführt werden. Dabei wird die Winkellage des elektromechanischen Aktuators gefiltert, bevor der Wert der Winkellage dem Kennfeld zugeführt wird. Der Ausgangswert aus dem Kennfeld, der sich aus den zugeführten Werten der Winkellage und der Sollstromanforderung ergibt, wird nachfolgend mit der Sollstromanforderung multipliziert, um eine korrigierte Sollstromanforderung zu erhalten.

In einer bevorzugten Ausführungsform wird die korrigierte Sollstromanforderung einer weiteren Kennlinie zur nochmaligen Korrektur zugeführt. Außerdem kann die so korrigierte Sollstromanforderung durch gewichten mit einem Korrekturfaktor letztmalig angepasst werden.

Zur Aufnahme der empirisch ermittelten Daten oder zur Erfolgskontrolle des Kalibrierungsvorganges wird ein Kraftmessaufnehmer an der Trittfläche der Pedalplatte angeordnet, um die vom elektromechanischen Aktuator erzeugte zusätzliche Rückstellkraft zu messen.

Die Erfindung wird nachfolgend anhand eines Ausführungsbeispiels im Zusammenhang mit der beiliegenden Zeichnung näher erläutert. In der Zeichnung zeigen:
- Fig. 1: eine schematische Darstellung einer Fahrpedaleinheit an der das erfindungsgemäße Verfahren durchgeführt werden kann;
- Fig. 2: eine Schnittdarstellung der Fahrpedaleinheit in seiner unbetätigten Nulllage;
- Fig. 3: eine Schnittdarstellung der Fahrpedaleinheit in seiner betätigten Endlage und
- Fig. 4: ein Ablaufdiagramm des erfindungsgemäßen Verfahrens.

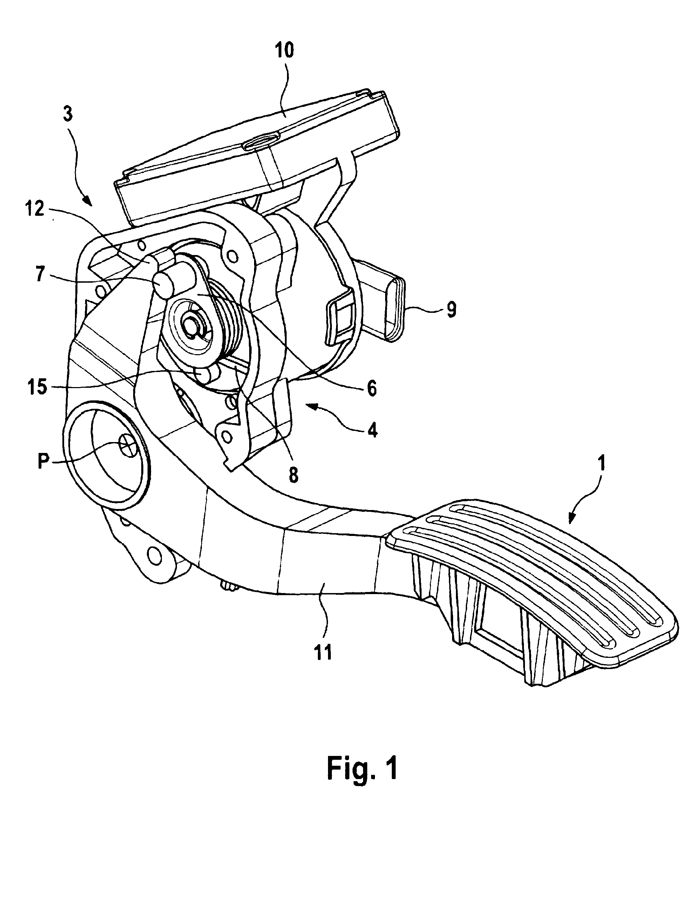

In Fig. 1 ist eine Fahrpedaleinheit für Kraftfahrzeuge dargestellt. Wenn der Fahrzeugführer auf eine Pedalplatte 1 der Fahrpedaleinheit tritt und sich eine durch seine entsprechende Fuß-Betätigungskraft herbeigeführte Lageänderung der Pedalplatte gegenüber der Ausgangslage entgegen einer Rückstellkraft F_{Rück} einstellt, so führt dies zu einer Erhöhung der Antriebskraft des Antriebsmotors des Kraftfahrzeugs. Dabei ist es unerheblich, ob der Antriebsmotor des Kraftfahrzeugs durch einen Verbrennungsmotor oder einen bzw. mehrere Elektromotoren oder durch eine Kombination der genannten Motoren realisiert wird. Löst der Fahrzeugführer seinen Fuß von der Pedalplatte 1, so befördert eine Rückstellkraft F_{Rück} die Pedalplatte 1 in Richtung seiner Ausgangslage zurück. Diese Rückstellkraft wird von einer in Fig. 1 nicht dargestellten Pedalrückstellfeder 2 erzeugt. Bei der in Fig. 1 dargestellten Ausführungsform handelt es sich um eine sogenannte hängende Fahrpedaleinheit: Die Pedalplatte 1 ist mit einem Pedalhebel verbunden, der um eine Achse P drehbar gelagert ist. Für stehende Fahrpedaleinheiten ist das hier beschriebene Verfahren ebenfalls anwendbar.

In modernen Kraftfahrzeugen werden dem Fahrzeugführer durch Anzeigesysteme zahlreiche optische und/oder akustische Informationen übermittelt. Bei einer Vielzahl derartiger optischer und/oder akustischer Informationen kann der Fahrzeugführer leicht wichtige Informationen übersehen oder nimmt diese nicht wahr. Daher werden dem Fahrzeugführer auf besonders einfache Weise haptische Informationen über die Fahrpedaleinheit übermittelt. Die in Fig. 1 dargestellte Fahrpedaleinheit ist in der Lage, mit Hilfe eines elektromechanischen Aktuators 4 eine zusätzliche Rückstellkraft F_{Zusatz} zu erzeugen, die entgegen der Betätigungskraft des Fahrzeugführers beim Niederdrücken der Pedalplatte 1 wirkt. Außerdem sind mit Hilfe des elektromechanischen Aktuators 4 Vibrationen oder zeitlich kurze Kraftimpulse an der Pedalplatte 1 erzeugbar, die der Fahrzeugführer über seinen Fuß, der auf der Pedalplatte 1 ruht, wahr nimmt. So kann beispielsweise zum ökonomischen und verbrauchssparenden Betrieb des Kraftfahrzeugs angehalten werden, indem die Vibration der Pedalplatte 1 oder der Kraftimpuls an der Pedalplatte 1 vor einer ineffizienten Motordrehzahl des Antriebsmotors warnt. Andere haptische Informationen, die dem Fahrzeugführer übermittelt werden können sind außerdem die Übermittlung sicherheitskritischer Informationen wie ein unzureichender Abstand zum vorausfahrenden Fahrzeug.

Die zusätzliche Rückstellkraft F_{Zusatz} wird über einen Arm 12 auf den Pedalhebel 11 und damit auf die Pedalplatte 1 übertragen. Der elektromechanische Aktuator 4 ist im vorliegenden Ausführungsbeispiel als Torquemotor ausgebildet. Torquemotoren zeichnen sich dadurch aus, dass sie sehr hohe Drehmomente zur Verfügung stellen. Der elektromechanische Aktuator 4 wirkt als Kraftrückstellungseinrichtung, deren zusätzliche Rückstellkraft F_{Zusatz} auf den Pedalhebel 11 bzw. die Pedalplatte 1 in Richtung einer Geschwindigkeitsverminderung des Kraftfahrzeugs wirkt. Mit dem elektromechanischen Aktuator 4 ist eine Antriebsscheibe 6 drehbar angeordnet, die mittels einer Antriebsrolle 7 oder andere geeignete Vorrichtungen, wie z.B. gleitende Freiformflächen, die zusätzliche Rückstellkraft F_{Zusatz} auf den Pedalhebel 11 ausüben kann. Eine Steuereinheit 10 zur Steuerung des elektromechanischen Aktuators 4 ist ebenfalls in einem gemeinsamen Gehäuse 3 integriert. Eine Schnittstelle 9 umfasst die Stromversorgung der Leistungselektronik und somit die des elektromechanischen Aktuators 4, um den Austausch von Signalen zwischen der Steuereinheit 10 und weiteren Steuergeräten außerhalb der Fahrpedaleinheit über einen Kommunikationsbus im Kraftfahrzeug, wie beispielsweise einen CAN-Bus, zu ermöglichen.

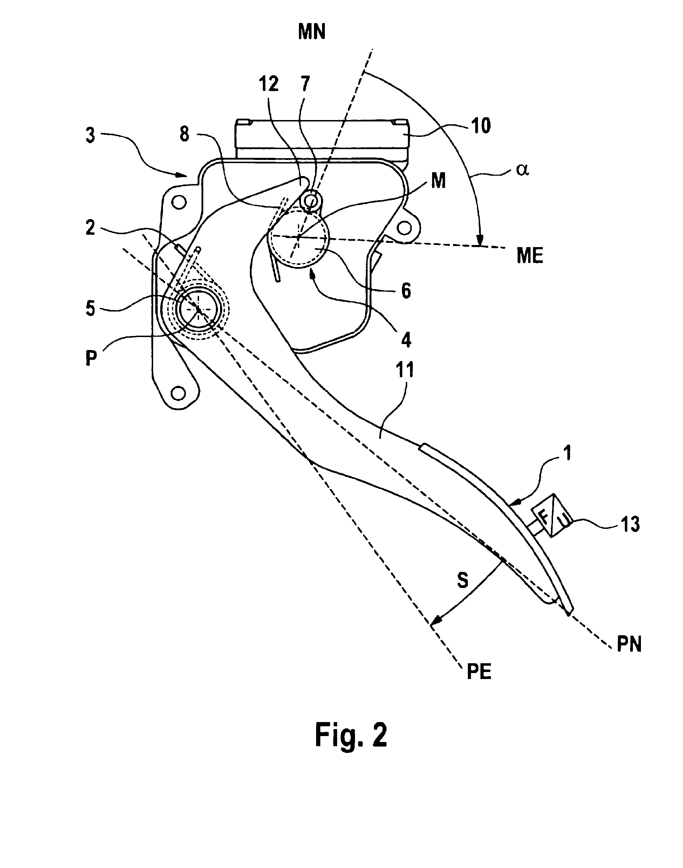

Fig. 2 zeigt eine Fahrpedaleinheit mit einem Pedalhebel 11 in seiner unbetätigten Nulllage PN. Das heißt, der Fuß des Fahrzeugführers übt auf die Pedalplatte 1 keine Kraft in Richtung Geschwindigkeitserhöhung des Kraftfahrzeugs aus. Wie bereits erwähnt, ist der Pedalhebel 11 um den Drehpunkt P schwenkbar angeordnet und zwar von einer Nulllage PN bis zur Endlage PE. In dieser Endlage PE ist die Fahrpedaleinheit voll betätigt und der Fahrzeugführer wünscht, sein Fahrzeug mit voller Kraft fortzubewegen. Der Bereich von der Nulllage PN bis zur Endlage PE wird auch durch den Pedalhub S beschrieben. In der Nulllage PN beträgt der Pedalhub S = 0% und in der Endlage PE beträgt der Pedalhub entsprechend S = 100%. Im Drehpunkt P des Pedalhebels 11 ist eine Schenkelfeder als Pedalrückstellfeder 2 derart angeordnet, dass sie den Pedalhebel 11 mit der Rückstellkraft F_{Rück} in seine Nulllage PN drückt. Die Drehachse des elektromechanischen Aktuators 4 dreht von einer Endlage ME bis zu seiner Nulllage MN. Die Lage der Drehachse des elektromechanischen Aktuators 4 wird dabei durch den Winkel α charakterisiert. Im beschriebenen Ausführungsbeispiel sind die Drehpunkte P und M des Pedalhebels 11 und des Elektromotors 4 örtlich getrennt. Es wäre aber durchaus eine Fahrpedaleinheit denkbar, bei der die beiden Drehpunkte P und M zusammenfallen.

Am elektromechanischen Aktuator 4 ist eine Aktuatorrückholfeder 8 derart angeordnet, dass die Antriebsscheibe 6 des elektromechanischen Aktuators 4 mittels der Antriebsrolle 7 den Pedalhebel 11 ebenfalls in Richtung von dessen Nulllage PN drückt, insbesondere wenn der elektromechanische Aktuator 4 nicht bestromt ist. Dabei ist hier jeweils ein Ende der Pedalrückstellfeder 2 bzw. Aktuatorrückholfeder 8 zumindest in Druckrichtung der Feder fest mit dem Gehäuse 3 verbunden. Hier ist das eine Ende der Aktuatorrückholfeder 8 an den Zapfen 15 des Gehäuses 3 angebracht. Das andere Ende der Pedalrückstellfeder 2 wirkt auf den Pedalhebel 11 bzw. das der Motorrückholfeder 8 auf die Antriebsscheibe 6. Der Winkelbereich, der durch die jeweilige Nulllage MN, PN und Endlage ME, PE der Federn 2, 8 bestimmt ist, ist bei der Motorrückholfeder 8 sowohl bezüglich der Nulllage MN als auch bezüglich der Endlage ME größer als bei der Pedalrückstellfeder 2. Dadurch ist gewährleistet, dass die Antriebsscheibe 6 über die Antriebsrolle 7 zu jeder Zeit am Arm 12 des Pedalhebels 11 anliegt. Das heißt, dass die Motorrückholfeder 8 zumindest im unbestromten Zustand des elektromechanischen Aktuators 4 immer vorgespannt ist.

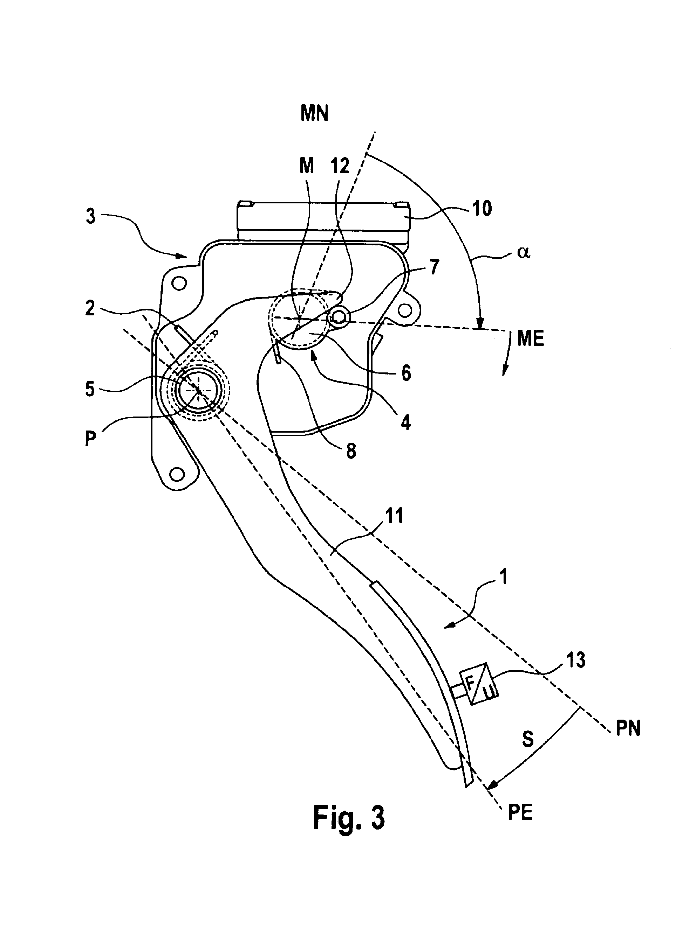

Fig. 3 entspricht der Darstellung in Fig. 2, mit dem einen Unterschied, dass sich der Pedalhebel 11 in seiner Endlage PE befindet. Die Endlage ME des Elektromotors 4 ist aber noch nicht erreicht, was wiederum durch den Pfeil in Richtung ME angedeutet ist.

Zur Ansteuerung des Elektromotors 4, insbesondere durch eine im Pedalsystem integrierte Steuereinheit 10, ist es von Vorteil, die Winkellage α des elektromechanischen Aktuators 4 durch einen entsprechenden Sensor, beispielsweise einen Hallsensor zu erfassen. Entsprechende Sensoren sind in den Figuren jedoch nicht gezeigt. Alternativ kann, unter Einsparung des eben genannten Sensors, softwaretechnisch aus der Lage des Pedalhebels 11 auf die Lage des elektromechanischen Aktuators 4 geschlossen werden, wobei die Lage des Pedalhebels 11 der Steuereinheit 10 vorzugsweise über den Kommunikationsbus mitgeteilt wird. Durch diese Vorgehensweise werden die aus einer elektrischen Kopplung des Sensors für die Lage des Pedalhelbels 11 und der Steuereinheit 10 resultierende sicherheitsrelevante Aspekte vermieden.

Das Problem, das das hier beschriebene Verfahren löst, ist, dass elektrodynamische und geometrische Nichtlinearitäten dazu führen, dass über verschiedene Winkellagen α des elektromechanischen Aktuators 4 bei identischer, elektrischer Ansteuerung kein identisches Kraftgefühl am Fahrerfuß erzeugt wird. Werden die Regelungsalgorithmen in der Steuereinheit des elektromechanischen Aktuators 4 in einer bestimmten Winkellage α mit einer festen Sollstromanforderung I_{Soll} angesteuert, so erzeugt der elektromechanische Aktuator eine bestimmte zusätzliche Rückstellkraft F_{Zusatz}. Wird nun dieselbe Sollstromanforderung I_{Soll} bei einer anderen Winkellage α des elektromechanischen Aktuators 4 wirksam, so erzeugt der elektromechanische Aktuator 4 ohne das Verfahren zur Kraftkalibrierung eine abweichende zusätzliche Rückstellkraft F_{Zusatz}. Die an der Pedalplatte 1 resultierende zusätzliche Rückstellkraft F_{Zusatz} wird dabei von einem Kraftmessaufnehmer 13 erfasst.

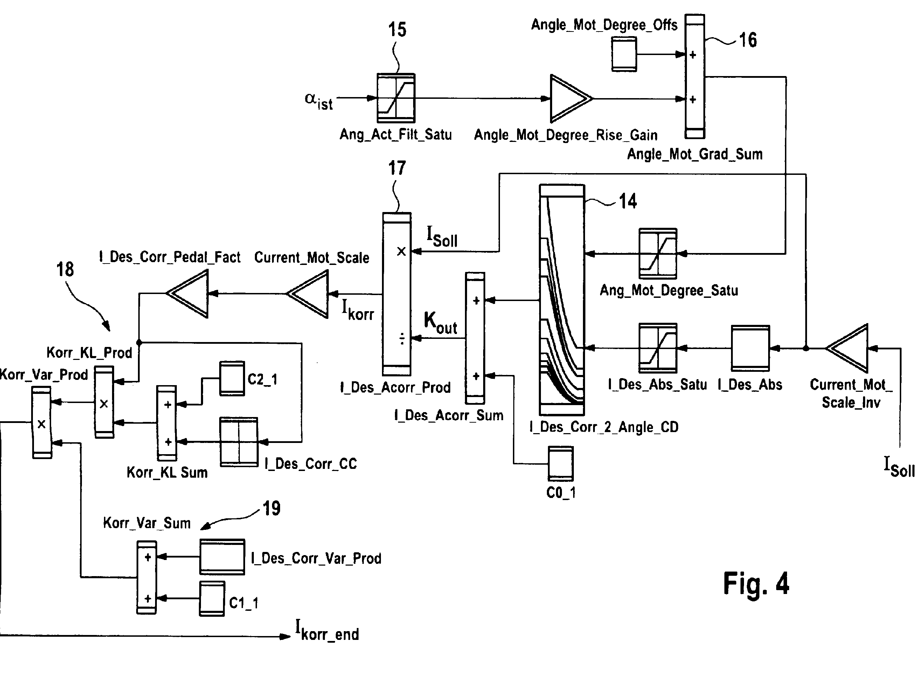

Das vorliegende Verfahren schlägt nun vor, dass ein Kalibrierungsvorgang durchgeführt wird, sodass ein linearer Zusammenhang zwischen der vorstehenden Sollstromanforderung I_{Soll} und der zusätzlichen Rückstellkraft F_{Zusatz} über den gesamten Pedalhub S realisiert wird. Der schließlich im elektromechanischen Aktuator 4 real fließende Iststrom I_{Ist_Motor}, ist im Allgemeinen betragsmäßig ungleich der Sollstromanforderung. Das Verfahren ist dreistufig und wird anhand der Fig. 4 näher erläutert: Zunächst wird im Schritt 15, in der ersten Stufe des Verfahrens, die gemessene Winkellage α des elektromechanischen Aktuators 4 begrenzt und im Verfahrensschritt 16 als renormierte Winkellage α ausgegeben und einem zweidimensionalen Kennfeld 14 zugeführt. Die zweite Eingangsgröße für das Kennfeld 14 ist eine Sollstromanforderung I_{Soll} der Steuereinheit 10, die durch den Kalibrierungsvorgang derart geändert wird, dass der gewünschte lineare Zusammenhang zwischen der Sollstromanforderung I_{Soll} und der zusätzlichen Rückstellkraft F_{Zusatz} entsteht. In dieser ersten Stufe der Kraftkalibrierung gibt nun das Kennfeld 14 einen Ausgangswert Kₒᵤₜ aus, der im Schritt 17 mit der Sollstromanforderung I_{Soll} multipliziert wird, um den korrigierten Sollstrom Iₖₒᵣᵣ zu erhalten.

In einer zweiten Stufe der Kraftkalibrierung kann die korrigierte Sollstromanforderung Iₖₒᵣᵣ im Schritt 18 einer weiteren, geeigneten Kennlinie zugeführt werden. Diese zweite Stufe ist prinzipiell redundant zur eben beschriebenen ersten Stufe des Kalibrierungsvorganges unter Einbeziehung des Kennfeldes 14. Bei der zweiten Stufe der Kraftkalibrierung wird der korrigierten Sollstromanforderung Iₖₒᵣᵣ ein Korrekturfaktor Iᵥₐᵣᵢₐₙₜ hinzugefügt, der von der in der ersten Stufe korrigierten Sollstromanforderung Iₖₒᵣᵣ abhängt.

Eine dritte Stufe der Kraftkalibrierung, bestehend aus einer Multiplikation der Ausgangsgröße aus der zweiten Stufe der Kraftkalibrierung mit einem Gewichtungsfaktor, kann im Schritt 19 vorgesehen werden und ist im Prinzip redundant zur ersten und zweiten Stufe der Kraftkalibrierung. Ausgegeben wird die resultierende, korrigierte Sollstromanforderung I_{korr_end}, die dafür sorgt, dass unabhängig von der Pedalstellung und damit unabhängig von der Winkellage α des elektromechanischen Aktuators 4, für eine vorbestimmte Sollstromanforderung I_{Soll} ein über den ganzen Winkelbereich des Pedalhebels konstanter Kraftwert der zusätzlichen Rückstellkraft F_{Zusatz_Soll} erzeugt wird.

Das Kennfeld 14 in der ersten Stufe der Kraftkalibrierung ist als Matrix ausgebildet. Diese Matrix wird entweder mit empirisch ermittelten Daten für jedes einzelne Pedal oder aus der Kraftkalibrierung einer repräsentativen Charge von Fahrpedalmodulen oder mit Daten einer Modellberechnung der Fahrpedaleinheit gefüllt. Bei der empirischen Datenaufnahme ist es notwendig, für alle Winkellagen des elektromechanischen Aktuators 4 und für verschiedene Sollstromanforderungen, die dem System zugeführt werden, die resultierende zusätzliche Rückstellkraft F_{Zusatz} an der Pedalplatte 1 mit Hilfe des Kraftmessaufnehmers 13 zu ermitteln. Ein linearer Zusammenhang zwischen den verschiedenen Sollstromanforderungen I_{Soll} an den elektromechanischen Aktuator 4 und der zusätzlichen Rückstellkraft F_{Zusatz} wird dann über den gesamten Pedalhub S und über alle Winkellagen α des elektromechanischen Aktuator 4 realisiert, indem die Nichtlinearitäten mit Hilfe der empirisch ermittelten Daten herausgerechnet werden.

Das Verfahren der ersten Stufe allein, ist zeitlich aufwendig und somit für den Einsatz in einer Serienproduktion wenig geeignet. Aus diesem Grund wird einerseits die oben genannte Matrix im Allgemeinen mit Durchschnittswerten gefüllt. Andererseits werden dann die weiteren Stufen der Kraftkalibrierung notwendigerweise nachgeschaltet.

Die Daten der für die zweite Stufe der Kraftkalibrierung notwendigen Kennlinie, wird durch eine ähnliche Vorgehensweise ermittelt, wobei hier wesentlich weniger Parameter als bei der Bestimmung der Korrekturmatrix der ersten Stufe der Kraftkalibrierung zu bestimmen sind. Insgesamt werden hierbei für verschiedene Sollstromanforderungen I_{Soll}, die sich ergebenden Rückstellkräfte F_{Zusatz} an verschiedenen Winkelpositionen der Pedalplatte 11 gemessen. Anschließend wird für jeden Sollstromanforderungswert der entsprechende Wert der Kennlinie so bestimmt, dass sich der geforderte lineare Zusammenhang zwischen der Sollstromanforderung I_{Soll} an den elektromechanischen Aktuator 4 und der zusätzlichen Rückstellkraft F_{Zusatz} über den ganzen Winkelbereich mit der vom Einsatzzweck geforderten Genauigkeit ergibt.

Die Bestimmung des Gewichtungsfaktors aus der dritten Stufe der Kraftkalibrierung, erfolgt analog zur Bestimmung der vorstehenden Kennlinie, jedoch mit noch weniger Messwerten.

Da die Stufen der Kraftkalibrierung gewollt redundant sind kann, bei geeigneten Korrekturdaten der jeweils vorhergehenden Stufe der Kraftkalibrierung und entsprechend geringer Exemplarstreuung des Fahrpedalmoduls, das jeweils zeitsparendste und damit kostengünstigste Verfahren angewendet werden.

## Patentansprüche

1. Verfahren zum Betrieb einer Fahrpedaleinheit für Kraftfahrzeuge, wobei eine durch eine entsprechende Betätigungskraft herbeigeführte Lageänderung der Pedalplatte (1) gegenüber ihrer Ausgangslage entgegen einer Rückstellkraft (F_{Rück}) einer Pedalrückstellfeder (2) zu einer Erhöhung der Antriebskraft des Antriebsmotors des Kraftfahrzeugs führt und bei nachlassender Betätigungskraft die Rückstellkraft der Pedalrückstellfeder (2) die Pedalplatte (1) in Richtung ihrer Ausgangslage zurückbefördert, wobei ein fremdansteuerbarer elektromechanischer Aktuator (4) derart angeordnet ist, dass eine zusätzliche Rückstellkraft (F_{Zusatz}) auf die Pedalplatte (1) einstellbar ist, **dadurch gekennzeichnet, dass** mit Hilfe eines Kennfeldes (14) ein Kalibrierungsvorgang durchgeführt wird, sodass ein linearer Zusammenhang zwischen der Sollstromanforderung (I_{Soll}) an den elektromechanischen Aktuator (4) und der zusätzlichen Rückstellkraft (F_{Zusatz}) über den gesamten Pedalhub (S) realisiert wird,
wobei dieses Kennfeld (14) ermittelt wird, indem mittels eines Kraftmessaufnehmers (13) an der Trittfläche der Pedalplatte (1) die vom elektromechanischen Aktuator (4) erzeugte zusätzliche Rückstellkraft (F_{Zusatz}) gemessen wird, wobei
a. bei jeder Winkellage (α) des elektromechanischen Aktuators (4) für einen vorbestimmte Sollstromanforderung (I_{Soll}) ein konstanter Kraftwert der zusätzlichen Rückstellkraft (F_{Zusatz_Soll}) erzeugt wird, indem
b. dem Kennfeld (14) die Winkellage (α) des elektromechanischen Aktuators (4) sowie eine Sollstromanforderung (I_{Soll}) aus einer Steuereinheit (10) zugeführt werden und
c. der Ausgangswert (Kₒᵤₜ) aus dem Kennfeld nachfolgend mit der Sollstromanforderung (I_{Soll}) multipliziert wird um eine korrigierte Sollstromanforderung (Iₖₒᵣᵣ) zu erhalten.

2. Verfahren nach Anspruch 1, **dadurch gekennzeichnet, dass** die Winkellage (α) des elektromechanischen Aktuators (4) begrenzt wird, bevor der Wert der Winkellage (α) dem Kennfeld zugeführt wird.

3. Verfahren nach Anspruch 1 oder 2, **dadurch gekennzeichnet, dass** die korrigierte Sollstromanforderung (Iₖₒᵣᵣ) einer weiteren Kennlinie zugeführt wird.

4. Verfahren nach Anspruch 3, **dadurch gekennzeichnet, dass** der korrigierten Sollstromanforderung (Iₖₒᵣᵣ) ein Korrekturfaktor hinzugefügt wird.

## Claims

1. A method for operating an accelerator pedal unit for motor vehicles, wherein a change in position of the pedal plate (1), which is brought about by a corresponding activation force, with respect to the starting position of said pedal plate counter to a restoring force (F_{Rück}) of a pedal restoring spring (2), leads to an increase in the driving force of the drive motor of said motor vehicle and, when said activation force diminishes, said restoring force of said pedal restoring spring (2) moves said pedal plate (1) back in the direction of its starting position, wherein an electromechanical actuator (4) which can be actuated externally is arranged in such a way that an additional restoring force (F_{Zusatz}) on said pedal plate (1) can be set, **characterized in that** a calibration process is carried out, using a characteristic diagram (14), with the result that a linear relationship is implemented between the setpoint current request (I_{Soll}) to said electromechanical actuator (4) and said additional restoring force (F_{Zusatz}) over the entire pedal stroke (S),
wherein this characteristic diagram (14) is determined by said additional restoring force (F_{Zusatz}) generated by said electromechanical actuator (4) being measured by means of a force measuring sensor (13) on the tread area of said pedal plate (1), wherein
a. a constant force value of the additional restoring force (F_{Zusatz_Soll}) is generated for a predetermined setpoint current request (I_{Soll}) at each angular position (α) of said electromechanical actuator (4), by
b. said angular position (α) of said electromechanical actuator (4) and a setpoint current request (I_{Soll}) being fed to said characteristic diagram (14) from a control unit (10) and
c. said output value (Kₒᵤₜ) from said characteristic diagram then being multiplied by said setpoint current request (I_{Soll}) in order to obtain a corrected setpoint current request (Iₖₒᵣᵣ).

2. The method according to claim 1, **characterized in that** said angular position (α) of said electromechanical actuator (4) is limited before the value of said angular position (α) is fed to said characteristic diagram.

3. The method according to claim 1 or 2, **characterized in that** said corrected setpoint current request (Iₖₒᵣᵣ) is fed to a further characteristic curve.

4. The method according to claim 3, **characterized in that** a correction factor is added to said corrected setpoint current request (Iₖₒᵣᵣ).

## Revendications

1. Procédé permettant de faire fonctionner un ensemble de pédale d'accélérateur pour des véhicules automobiles, un changement de position du patin de pédale (1) par rapport à sa position initiale provoqué par une force d'actionnement correspondante à l'encontre d'une force de rappel (F_{Ruck}) d'un ressort de rappel de la pédale (2) entraînant une augmentation de la force d'entraînement du moteur d'entraînement du véhicule automobile, et la force de rappel du ressort de rappel de la pédale (2) ramenant le patin de pédale (1) en direction de sa position initiale lorsque la force d'actionnement diminue, un actionneur (4) électromécanique pilotable de l'extérieur étant disposé de telle sorte qu'une force de rappel supplémentaire (F_{Zusatz}) peut être réglée sur le patin de pédale (1) **caractérisé en ce que**, à l'aide d'un champ caractéristique (14), il est effectué un processus d'étalonnage de telle sorte qu'il est réalisé une relation linéaire entre la demande de courant nominal (I_{Soll}) adressée à l'actionneur (4) électromécanique et la force de rappel supplémentaire (F_{Zusatz}) sur la totalité de la course de pédale (S),
ce champ caractéristique (14) étant déterminé en mesurant, au moyen d'un capteur de mesure de force (13) sur la plateforme du patin de pédale (1), la force de rappel supplémentaire (F_{Zusatz}) produite par l'élément réflecteur (4),
a) une valeur de force constante de la force de rappel supplémentaire (F_{Zusatz_Soll}) étant produite en présence de chaque position angulaire (α) de l'actionneur (4) électromécanique pour une demande de courant nominal (I_{Soll}) prédéfinie, par le fait que
b) la position angulaire (α) de l'actionneur (4) électromécanique ainsi qu'une demande de courant nominal (I_{Soll}) en provenance d'une unité de commande (10) sont conduites au champ caractéristique (14), et
c) la valeur de départ (Kₒᵤₜ) en provenance du champ caractéristique est ensuite multipliée par la demande de courant nominal (I_{Soll}) afin d'obtenir une demande de courant nominal corrigée (Iₖₒᵣᵣ).

2. Procédé selon la revendication 1, **caractérisé en ce que** la position angulaire (α) de l'actionneur (4) électromécanique est limitée avant que la valeur de la position angulaire (α) soit conduite au champ caractéristique.

3. Procédé selon la revendication 1 ou 2, **caractérisé en ce que** la demande de courant nominal corrigée (Iₖₒᵣᵣ) est conduite à une autre courbe caractéristique.

4. Procédé selon la revendication 3, **caractérisé en ce qu'**un facteur de correction est ajouté à la demande de courant nominal corrigée (Iₖₒᵣᵣ).
